# EUROPÄISCHE PATENTANMELDUNG

(11) **EP 4 257 848 A1**
(43) Veröffentlichungstag der Anmeldung: **11.10.2023**
(21) Anmeldenummer: 23166238.8
(22) Anmeldetag: 31.03.2023
(51) Int. Cl.: F16H 49/00, F16H 57/08, F16H 1/28

(54) **GETRIEBESYSTEM**

(30) Priorität: 04.04.2022 LU 501791
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Getriebesystem, das ein Drehmomentabstützelement und ein Dreiwellengetriebe aufweist, welches wenigstens ein, insbesondere ringförmiges, Zahnrad aufweist. Das Getriebesystem zeichnet sich dadurch aus, dass das Zahnrad als Flansch ausgebildet ist oder einen Flansch aufweist und dass das Zahnrad mittels eines elastisch verformbaren Koppelbauteils, das einen mit dem Flansch drehfest verbundenen Gegenflansch aufweist, an dem Drehmomentabstützelement festgelegt ist.

## Beschreibung

Die Erfindung betrifft ein Getriebesystem, das ein Drehmomentabstützelement und ein Dreiwellengetriebe aufweist, welches wenigstens ein, insbesondere ringförmiges, Zahnrad aufweist.

Ein Getriebesystem der eingangs genannten Art kann beispielsweise ein als Planentengetriebe oder als Spannungswellengetriebe ausgebildetes Dreiwellengetriebe aufweisen, wobei sich eine der Wellen drehfest an einem Gehäuse, das als Drehmomentabstützelement fungiert, abstützt. Eine weitere der Wellen des Getriebesystems fungiert als Antrieb und die dritte Welle fungiert als Abtrieb.

Ein Spannungswellengetriebe besitzt zumeist ein starres, in einem Querschnitt senkrecht zur Axialrichtung kreisförmiges, innenverzahntes Zahnrad, das auch Circularspline genannt wird, und ein flexibles außenverzahntes Zahnrad, das auch Flexspline genannt wird und in dem von dem starren, innenverzahnten Zahnrad umgebenen Raumvolumen angeordnet ist. In dem außenverzahnten Zahnrad ist ein zumeist elliptischer Wellengenerator rotierbar angeordnet, dessen Außenumfang einen Lagersitz für ein radialflexibles Wälzlager aufweist. Über das radialflexible Wälzlager steht der Wellengenerator mit dem radialflexiblen, außenverzahnten Zahnrad in Kontakt. Das radialflexible Wälzlager ermöglicht es, den Wellengenerator relativ zu dem radialflexiblen, außenverzahnten Zahnrad rotieren zu können. Der Wellengenerator biegt das radialflexible Wälzlager und das radialflexible, außenverzahnte Zahnrad zu einer elliptischen Form, um die Verzahnungen des starren, innenverzahnten Zahnrades und des flexiblen außenverzahnten Zahnrades an jedem Ende der Ellipsen-Hauptachse (Hochachse) miteinander in Eingriff zu bringen. Bei dem radialflexiblen Wälzlager handelt es sich zumeist um ein Wälzlager mit Wälzkörpern, die als Kugeln ausgebildet sind.

Das radialflexible, außenverzahnte Zahnrad weist zumeist eine geringere Anzahl von Zähnen auf, als das starre, innenverzahnte Zahnrad. Wenn der Wellengenerator rotiert, wälzt die Außenseite des außenverzahnten Zahnrades auf der Innenseite des innenverzahnten, starren Zahnrades ab, wobei die Zähne des flexiblen außenverzahnten Zahnrades an gegenüberliegenden Seiten umlaufend in und außer Eingriff mit den Zähnen des starren, innenverzahnten Zahnrades gelangen. Aufgrund des Unterschiedes der Zähnezahlen kommt es zu einer Relativdrehung des radialflexiblen, außenverzahnten Zahnrades relativ zu dem starren, innenverzahnten Zahnrad, wenn der Wellengenerator rotiert wird. Der Wellengenerator muss nicht zwingend elliptisch ausgebildet sein. Vielmehr ist jede von der Kreisform abweichende Form möglich, die im Ergebnis den beschriebenen Eingriff der Verzahnung des flexiblen, außenverzahnten Zahnrades in die Verzahnung des starren, innenverzahnten Zahnrades bewirkt. Auch ist es möglich, den Wellengenerator derart auszubilden, dass die Verzahnung des radialflexiblen, außenverzahnten Zahnrades an drei oder mehr Stellen in die Verzahnung des starren, innenverzahnten Zahnrades eingreift.

Aus DE 10 2016 113 687 A1 ist ein Spannungswellengetriebe mit einem innenverzahnten Hohlrad bekannt. Das Hohlrad ist dazu ausgebildet und bestimmt, entlang einer Einpressrichtung in eine Aufnahme eines Getriebebauteils eingepresst zu werden, wobei das Hohlrad auf seiner Außenseite wenigstens einen in Tangentialrichtung umlaufenden Schneidvorsprung mit einer Schneidkante aufweist, die so ausgebildet ist, dass sie bei einem Einpressvorgang in das Getriebebauteil schneidet, und
wenigstens einen in Tangentialrichtung umlaufenden Klemmvorsprung aufweist, der keine Schneidkante aufweist und der axial von dem Schneidvorsprung beabstandet ist und der in Einpressrichtung dem Schneidvorsprung nachgelagert ist und der einen größeren Außendurchmesser aufweist, als der Schneidvorsprung.

Aus DE 102 22 696 A1 ist eine Wellengetriebevorrichtung und ein Lager mit geringem Gewicht bekannt. Ein äußerer oder ein innerer Lagerring des Lagers weist Fixieröffnungen auf, um eine Anbringung des Rings an einem anderen Element zu ermöglichen.

Es ist die Aufgabe der vorliegenden Erfindung, ein Getriebesystem anzugeben, das einfach montierbar ist und das einen Schutz gegen eine Überbelastung bietet.

Die Aufgabe wird durch ein Getriebesystem gelöst, das dadurch gekennzeichnet ist, dass das Zahnrad als Flansch ausgebildet ist oder einen Flansch aufweist und dass das Zahnrad mittels eines elastisch verformbaren Koppelbauteils, das einen mit dem Flansch drehfest verbundenen Gegenflansch aufweist, an dem Drehmomentabstützelement festgelegt ist.

Die Erfindung hat den ganz besonderen Vorteil, dass das Dreiwellengetriebe mittels des Koppelbauteils einfach, beispielsweise in einem Getriebegehäuse, montierbar ist, indem das als Flansch ausgebildete Zahnrad mit dem Gegenflansch des elastisch verformbaren Koppelbauteils verbunden wird, was beispielsweise durch ein einfaches Anschrauben möglich ist, wobei das elastisch verformbare Koppelbauteil vorteilhafter Weise eine derartige Ankopplung ermöglicht, dass das Dreiwellengetriebe von kurzzeitigen Belastungsspitzen weitgehend entkoppelt bleibt. Derartige Belastungsspitzen können beispielsweise auftreten, wenn ein mittels des Getriebesystems angetriebener Roboterarm versehentlich an einem Objekt anschlägt und seine Bewegung hierdurch abrupt gestoppt wird.

Unter dem Begriff "Getriebesystem" wird im Rahmen der vorliegenden Patentanmeldung ganz allgemein eine Vorrichtung verstanden, die außer einem Getriebe wenigstens ein weiteres, nicht zu dem Getriebe gehörendes Bauteil aufweist.

Bei einer besonders vorteilhaften Ausführung ist der Flansch an den Gegenflansch angeschraubt. Eine solche Ausführung erlaubt eine zuverlässige drehfeste Abbindung des Zahnrades an das Koppelbauteil, die im Bedarfsfall, beispielsweise im Wartungs- oder Reparaturfall, zerstörungsfrei wieder gelöst werden kann.

Insbesondere bei einer ringförmigen Ausbildung des Zahnrades kann der Gegenflansch vorteilhaft ebenfalls ringförmig ausgebildet sein. Auf diese Weise wird eine kompakte Bauweise ohne überstehende Ecken und/oder Kanten ermöglicht. Insbesondere können der Flansch und/oder der Gegenflansch einen Ring aufweisen, der mit, insbesondere umlaufend gleichmäßig beabstandeten, Bohrungen, insbesondere Durchgangsbohrungen oder Sacklochbohrungen, versehen ist. Die Bohrungen des Flanschs oder des Gegenflanschs können insbesondere als Gewindebohrungen ausgeführt sein.

Bei einer besonders zuverlässigen und kompakten Ausführung ist das Zahnrad unmittelbar und ohne Zwischenschaltung eines weiteren Bauteils an dem elastisch verformbaren Koppelbauteil befestigt. Alternativ oder zusätzlich kann das elastisch verformbare Koppelbauteil vorteilhaft unmittelbar und ohne Zwischenschaltung eines weiteren Bauteils an dem Drehmomentabstützelement befestigt sein.

Das Zahnrad kann insbesondere eine Innenverzahnung aufweisen. Die Innenverzahnung kann beispielsweise die Innenverzahnung eines Circularsplines oder eines Dynamicsplines eines Spannungswellengetriebes sein und mit der Außenverzahnung eines Flexsplines kämmen. Das Spannungswellengetriebe kann als Ringgetriebe oder als Topfgetriebe oder als Hutgetriebe ausgebildet sein.

Die Innenverzahnung kann alternativ beispielsweise die Innenverzahnung eines Hohlrades eines Planetengetriebes sein, die mit den Verzahnungen der Planetenzahnräder kämmt.

Es ist jedoch auch möglich, dass das Zahnrad eine Außenverzahnung aufweist. Beispielsweise kann das außenverzahnte Zahnrad als ein Circularspline oder ein Dynamicspline eines als Außenläufer ausgebildeten Spannungswellengetriebes fungieren. Alternativ ist es beispielsweise auch möglich, dass das Zahnrad das außenverzahnte Sonnenrad eines Planentengetriebes ist.

Bei einer ganz besonders vorteilhaften Ausführung ist das Zahnrad aus einem anderen Material hergestellt als das elastisch verformbare Koppelbauteil. Dies hat den ganz besonderen Vorteil, dass das Material des Zahnrades für dessen spezifische Funktion und insbesondere beispielsweise im Hinblick auf die Haltbarkeit der Verzahnung ausgelegt sein kann, während das Koppelbauteil aus einem für dessen spezifische Funktion beispielsweise aus einem Material mit einer anderen, insbesondere höheren, Streckgrenze und/oder Zugfestigkeit und/oder aus einem Material mit einem anderen, insbesondere höheren Elastizitätsmodul, hergestellt sein kann. Bei dem Material des elastisch verformbaren Koppelbauteils und/oder bei dem Material des Zahnrades kann es sich insbesondere auch um eine Legierung handeln.

Beispielsweise kann das Zahnrad aus Stahl hergestellt sein, während das Koppelbauteil aus Titan oder einer Titanlegierung hergestellt ist. Titan und die allermeisten Titanlegierungen haben zwar ein niedrigeres Elastizitätsmodul jedoch eine viel höhere Streckgrenze als Stahl. Eine hohe Streckgrenze ist für die spezifische Funktion des Koppelbauteils von besonderem Vorteil, weil dadurch eine hohe Belastbarkeit des Koppelbauteils ohne die Gefahr einer Beschädigung (beispielsweise durch eine plastische Verformung oder einen Bruch) erreicht wird.

Das elastisch verformbare Koppelbauteil kann auch aus mehreren Bauteilen, die aus gleichen oder aus unterschiedlichen Materialien hergestellt sein können, zusammengesetzt sein. Besonders robust ist eine Ausführung, bei der das elastisch verformbare Koppelbauteil einstückig, insbesondere einstückig aus einem einzigen Stück Rohmaterial, hergestellt ist.

Beispielsweise kann das ringförmige Zahnrad aus Stahl oder aus Guss oder aus einer Gusslegierung, insbesondere Stahlguss, hergestellt sein. Stahl hat sich als Werkstoff für Zahnräder bewährt und bietet eine hohe Standfestigkeit bei gleichzeitig überschaubaren Herstellkosten. Es ist jedoch nicht ausgeschlossen, dass das ringförmige Zahnrad aus einem anderen Material hergestellt ist.

Es ist allerdings auch möglich, dass das Zahnrad aus dem gleichen Material hergestellt ist, wie das elastisch verformbare Koppelbauteil. Beispielsweise können das Zahnrad und das elastisch verformbare Koppelbauteil aus Stahl hergestellt sein. Eine solche Ausführung bietet eine gute Belastbarkeit bei vergleichsweise geringen Material und Herstellkosten.

Ganz allgemein kann das elastisch verformbare Koppelbauteil vorteilhaft beispielsweise aus Aluminium oder aus einer Aluminiumlegierung oder aus Titan oder aus einer Titanlegierung oder aus Kunststoff hergestellt sein. In vorteilhafter Weise ist es, wie bereits erwähnt, auch möglich, dass das elastisch verformbare Koppelbauteil (oder wenigstens ein Teil des Koppelbauteils) aus Stahl hergestellt ist.

Bei einer ganz besonders vorteilhaften Ausführung ist wenigstens ein Anschlagelement vorhanden, das den Verformungsweg des elastisch verformbaren Koppelbauteils begrenzt und/oder das ausschließlich eine elastische Verformung des elastisch verformbaren Koppelbauteils zulässt. Auf diese Weise wird wirkungsvoll vermieden, dass das elastisch verformbare Koppelbauteil durch eine zu große Drehmomenteinwirkung beschädigt wird. Wenigstens ein Anschlagelement kann beispielsweise fest und unbeweglich an dem Drehmomentabstützelement angeordnet sein und den Bewegungsweg eines fest und unbeweglich an dem Flansch, dem Zahnrad oder dem Gegenflansch angeordneten weiteren Anschlagelements begrenzen.

Das Drehmomentabstützelement kann insbesondere als ein Getriebegehäuse ausgebildet sein. Insbesondere kann vorteilhaft vorgesehen sein, dass das Getriebegehäuse wenigstens einen Teil des Dreiwellengetriebes, insbesondere das gesamte Dreiwellengetriebe, einhaust. Alternativ oder zusätzlich kann das Getriebegehäuse derart ausgebildet sein, dass es das elastisch verformbare Koppelbauteil einhaust.

Das Drehmomentabstützelement kann beispielsweise als offener oder geschlossener Träger, beispielsweise als Träger einer Tragkonstruktion oder eines Fahrwerks oder eines Roboterarms, ausgebildet sein, an oder in dem das elastisch verformbare Koppelbauteil befestigt ist.

Bei einer ganz besonders vorteilhaften Ausführung weist das elastisch verformbare Koppelbauteil einen, insbesondere ringförmigen, Abstützflansch auf, der, insbesondere zerstörungsfrei wieder lösbar, drehfest an dem Drehmomentabstützelement festgelegt ist. Das Drehmomentabstützelement kann einen, insbesondere ringförmigen, Gegenabstützflansch aufweisen, der mit dem Abstützflansch, insbesondere zerstörungsfrei wieder lösbar, verbunden ist. Der Abstützflansch kann an den Gegenabstützflansch angeschraubt sein. Eine solche Ausführung erlaubt eine zuverlässige drehfeste Anbindung des Koppelbauteils an das Drehmomentabstützelement, die im Bedarfsfall, beispielsweise im Wartungs- oder Reparaturfall, zerstörungsfrei wieder gelöst werden kann.

Das elastisch verformbare Koppelbauteil kann in besonders vorteilhafter Weise wenigstens einen elastisch verformbaren Biegebalken, insbesondere mehrere elastisch verformbare Biegebalken, aufweisen. Eine solche Ausführung ist in vorteilhafter Weise einfach herstellbar. Außerdem ist bei einer solchen Ausführung das belastungsabhängige elastische Verformungsverhalten besonders präzise vorhersehbar. Darüber hinaus kann die Verformung des elastisch verformbaren Koppelbauteils bei einer solchen Ausführung besonders zuverlässig und genau überwacht werden, indem mit wenigstens einem Verformungssensor eine oder mehrere Biegeverformungen des Biegebalkens messtechnisch erfasst werden. Beispielsweise können auf den wenigstens einen Biegebalken Dehnungsmessstreifen aufgeklebt sein, um die Biegeverformungen des Biegebalkens messtechnisch zu erfassen. Die vorgenannten Vorteile können in ganz besonders vorteilhafter Weise insbesondere im Hinblick auf eine besonders genaue Messung ausgenutzt werden, wenn der wenigstens eine elastisch verformbare Biegebalken als Doppelbiegebalken ausgebildet ist.

Der Biegebalken kann insbesondere radial angeordnet sein. Besonders vorteilhaft im Hinblick auf eine symmetrische Kräfteverteilung ist eine Ausführung, bei der mehrere Biegebalken (insbesondere im Umfangsrichtung gleichmäßig verteilt) radial angeordnet sind. Eine solche Ausführung ist insbesondere in axialer Richtung besonders kompakt und bauraumsparend.

Der Biegebalken kann insbesondere axial angeordnet sein. Besonders vorteilhaft im Hinblick auf eine symmetrische Kräfteverteilung ist eine Ausführung, bei der mehrere Biegebalken (insbesondere im Umfangsrichtung gleichmäßig verteilt) axial angeordnet sind. Eine solche Ausführung ist insbesondere in radialer Richtung besonders kompakt und bauraumsparend.

Bei einer möglichen Ausführung sind der wenigstens eine Biegebalken und der Gegenflansch separat hergestellte und anschließend zusammengefügte Bauteile. Alternativ oder zusätzlich ist es auch möglich, dass der wenigstens eine Biegebalken und der Gegenabstützflansch separat hergestellte und anschließend zusammengefügte Bauteile sind.

Bei einer besonders robusten und langlebigen Ausführung sind der Gegenflansch und der wenigstens eine Biegebalken, gemeinsam einstückig, insbesondere gemeinsam einstückig aus demselben Stück Rohmaterial, hergestellt. Alternativ oder zusätzlich können auch der Abstützflansch und der wenigstens eine Biegebalken, gemeinsam einstückig, insbesondere gemeinsam einstückig aus demselben Stück Rohmaterial, hergestellt sein.

Im Hinblick auf eine zuverlässige Vorhersehbarkeit des elastischen Verformungsverhaltens des elastisch verformbaren Koppelbauteils und/oder im Hinblick auf eine präzise Messung der Verformung des elastisch verformbaren Koppelbauteils kann vorteilhaft vorgesehen sein, dass der Gegenflansch und der Abstützflansch, insbesondere ausschließlich, mittels des wenigstens einen Biegebalkens miteinander verbunden sind.

Ganz allgemein (und auch losgelöst von dem Vorhandensein wenigstens eines Biegebalkens) kann an dem elastisch verformbaren Koppelbauteil wenigstens ein Verformungssensor angeordnet sein, mittels dem die jeweils aktuelle elastische Verformung gemessen werden kann. Aus der gemessenen Verformung kann auf das Drehmoment zurückgeschlossen werden, das auf das Zahnrad einwirkt und/oder auf das Drehmoment, das auf das Dreiwellengetriebe einwirkt. Beispielsweise ist es möglich, eine Zuordnungstabelle zu erstellen, in der Verformungsmesswerten die jeweils zugehörigen Drehmomente zugeordnet sind. Die Zuordnungstabelle kann beispielsweise in digitaler Form in einem Speicher einer Steuerungsvorrichtung abgelegt sein.

Der Verformungssensor kann beispielsweise wenigstens einen Dehnungsmessstreifen aufweisen. Alternativ kann der Verformungssensor als kapazitiver Sensor ausgebildet sein.

Insbesondere kann das Getriebesystem auch mehrere Verformungssensoren (gleichen oder unterschiedlichen Typs) aufweisen. Beispielsweise kann an jedem Biegebalken des elastisch verformbaren Koppelbauteils wenigstens ein Verformungssensor angeordnet sein.

Eine Ausführung des Getriebesystems mit einem Verformungssensor ermöglicht es, das auf das Dreiwellengetriebe einwirkende Drehmoment zu messen und/oder, insbesondere kontinuierlich oder in regelmäßigen Zeitabständen, zu überwachen. Insbesondere kann das auf das Zahnrad einwirkende Drehmoment unmittelbar gemessen werden und daraus auf das Drehmoment geschlossen werden, das auf das Dreiwellengetriebe einwirkt.

Beispielsweise kann der Verformungssensor, wie bereits erwähnt, wenigstens einen Dehnungsmessstreifen aufweisen, der die elastische Verformung des elastisch verformbaren Koppelbauteils misst. Beispielsweise kann die elastische Verformung wenigstens eines Biegebalkens des elastisch verformbaren Koppelbauteils gemessen werden, um das jeweils einwirkende Drehmoment, mit dem sich das Zahnrad an dem Drehmomentabstützelement abstützt, zu ermitteln. Bei einer ganz besonders vorteilhaften Ausführung sind zwei Dehnungsmessstreifen in Längsrichtung hintereinander auf das elastisch verformbaren Koppelbauteil, insbesondere auf jeweils einen Biegebalken des elastisch verformbaren Koppelbauteils, aufgeklebt, was eine besonders genaue Messung ermöglicht. Es kann auch eine höhere Anzahl von Dehnungsmessstreifen (beispielsweise vier oder acht Dehnungsmessstreifen) aufgeklebt sein, um die Messgenauigkeit zu erhöhen. Beispielsweise können auf eine Seite des Biegenbalkens vier Dehnungsmessstreifen aufgeklebt sein, während auf die gegenüberliegende Seite ebenfalls vier Dehnungsmessstreifen aufgeklebt sind. Die vier Dehnungsmessstreifen einer Seite können jeweils in einer besonderen Messschaltung, beispielsweise in einer Wheatstoneschen Messbrücke, miteinander verschaltet sein. Bei einer solchen Ausführung sind besonders genaue Messungen möglich, weil sich der der Einfluss von Querkräften weniger oder gar nicht auswirkt.

Eine ganz besonders genaue Messung ist ermöglicht, wenn der Biegebalken als Doppelbiegebalken ausgebildet ist, der sich bei einer Belastung s-förmig verformt. Alternativ ist es auch möglich, dass der Verformungssensor als Scherkraftsensor ausgebildet ist. Eine solche Ausführung ist besonders robust. Der Verformungssensor kann insbesondere auch als piezoelektrischer Kraftsensor ausgebildet sein.

Bei einer ganz besonders vorteilhaften Ausführung wertet eine Steuerungsvorrichtung die Messsignale des Verformungssensors aus und gibt einen, vorzugsweise elektrischen, Messwert aus. Der Messwert kann dem jeweils aktuell wirkenden Drehmoment entsprechen. Beispielsweise kann der Messwert auf einem Display angezeigt werden oder an die Steuerung eines übergeordneten Systems oder eines anderen Systems übergeben werden. Der Messwert kann insbesondere bei der Steuerung eines übergeordneten Systems, zu dem das Getriebesystem gehört, verwendet werden. Bei dem übergeordneten System kann es sich beispielsweise um einen Roboter, insbesondere einen Industrieroboter, oder um ein Robotergelenk oder um ein Fahrzeug oder um eine Fahrzeugkomponente, insbesondere ein aktives Fahrwerk für ein Kraftfahrzeug oder eine Lenkung, handeln.

Bei einer ganz besonders vorteilhaften Ausführung wertet eine Steuerungsvorrichtung die Messsignale des Verformungssensors aus und gibt ein, vorzugsweise elektrisches, Abschaltsignal aus. Das Abschaltsignal kann dazu dienen, ein drehmomenteinspeisendes System abzuschalten, um eine Überbelastung und damit eine Beschädigung des Getriebesystems oder eines übergeordneten Systems, in die das Getriebesystem eingebaut ist, zu verhindern. Das Abschaltsignal kann alternativ oder zusätzlich beispielsweise auch dazu dienen, eine schaltbare Kupplung zu öffnen, um eine Überbelastung und damit eine Beschädigung des Getriebesystems oder eines übergeordneten Systems, in die das Getriebesystem eingebaut ist, zu verhindern. Die schaltbare Kupplung kann Teil eines übergeordneten Systems, in die das Getriebesystem eingebaut ist, sein. Die schaltbare Kupplung kann alternativ auch Teil des Getriebesystems sein.

Von ganz besonderem Vorteil ist ein Aktuator, der ein erfindungsgemäßes Getriebesystem und einen, insbesondere elektrischen, Antriebsmotor aufweist, dem das Getriebesystem triebtechnisch nachgeschaltet ist.

Bei einer ganz besonders kompakten und robusten Ausführung des Aktuators sind der Antriebsmotor und das Dreiwellengetriebe koaxial zueinander angeordnet. Alternativ ist beispielsweise auch eine achsparallele Anordnung von Antriebsmotor und Dreiwellengetriebe möglich, wobei beispielsweise ein Zugmitteltrieb triebtechnisch zwischen den Antriebsmotor und den Antrieb des Dreiwellengetriebes geschaltet sein kann.

Der Aktuator kann ein Aktuatorgehäuse aufweisen, das den Antriebsmotor und/oder das Dreiwellengetriebe einhaust. Auf diese Weise sind der Antriebsmotor und/oder das Dreiwellengetriebe vor Verschmutzung und Beschädigung geschützt.

Bei einer ganz besonders kompakt ausbildbaren Ausführung ist das Aktuatorgehäuse wenigstens teilweise durch das Getriebegehäuse gebildet. Es ist bei einer ganz besonders zuverlässigen Ausführung jedoch auch möglich, dass in dem Aktuatorgehäuse zusätzlich ein Getriebegehäuse angeordnet ist.

In dem Aktuatorgehäuse kann vorteilhaft eine Steuerungsvorrichtung, insbesondere eine Steuerungselektronik, angeordnet sein. Die Steuerungsvorrichtung, insbesondere Steuerungselektronik, kann insbesondere dazu ausgebildet sein, den Antriebsmotor zu steuern oder zu regeln. Alternativ oder zusätzlich kann die Steuerungsvorrichtung, insbesondere Steuerungselektronik, die oben erwähnte Steuerungsvorrichtung beinhalten, die Messsignale von wenigstens einem Verformungssensor empfängt und auswertet.

Die Steuerungsvorrichtung, insbesondere Steuerungselektronik, kann vorteilhaft räumlich zwischen dem Dreiwellengetriebe und dem Antriebsmotor angeordnet sein. Eine solche Ausführung erlaubt auf einfache Weise eine elektrische Anbindung der Steuerungsvorrichtung, insbesondere Steuerungselektronik, sowohl an den wenigstens einen Verformungssensor als auch an den Antriebsmotor.

Alternativ kann der Antriebsmotor räumlich zwischen dem Dreiwellengetriebe und der Steuerungsvorrichtung, insbesondere Steuerungselektronik, angeordnet sein. Bei einer solchen Ausführung kann wenigstens ein elektrisches Kabel oder wenigstens eine Litze, das bzw. die von einem an dem Koppelbauteil angeordneten Verformungssensor durch einen Zwischenraum zwischen dem Antriebsmotor und dem Aktuatorgehäuse, insbesondere durch einen Zwischenraum zwischen einem Stator des Antriebsmotors und dem Aktuatorgehäuse, hindurch zu der Steuerungsvorrichtung, insbesondere Steuerungselektronik, verläuft, vorhanden sein. Eine solche Ausführung erlaubt eine elektrische Anbindung der Steuerungsvorrichtung, insbesondere Steuerungselektronik, sowohl an den wenigstens einen Verformungssensor als auch an den Antriebsmotor, ohne dass das wenigstens eine Kabel bzw. die wenigstens eine Litze aus dem Aktuatorgehäuse heraus und wieder in das Aktuatorgehäuse hinein geführt werden muss.

Von ganz besonderem Vorteil ist ein Roboter, insbesondere ein Industrieroboter, der wenigstens ein erfindungsgemäßes Getriebesystem oder einen erfindungsgemäßen Aktuator mit einem solchen Getriebesystem beinhaltet.

Insbesondere kann das erfindungsgemäße Getriebesystem in einem Robotergelenk eingesetzt werden. Durch die Verwendung des erfindungsgemäßen Getriebesystems bzw. des erfindungsgemäßen Aktuators kann die Zuverlässigkeit des Roboters erhöht und die Ausfallzeit verringert werden.

Von besonderem Vorteil ist insbesondere eine Fahrzeugkomponente, beispielsweise ein aktives Fahrwerk oder eine Lenkung oder ein Nockenwellenversteller oder eine Stellvorrichtung zur Veränderung des Expansionshubes und/oder des Verdichtungsverhältnisses eines Verbrennungsmotors für ein Kraftfahrzeug, die wenigstens ein erfindungsgemäßes Getriebesystem oder einen erfindungsgemäßen Aktuator mit einem solchen Getriebesystem aufweist. Durch die Verwendung einer solchen Fahrzeugkomponente kann die Zuverlässigkeit und Sicherheit des Fahrzeuges erhöht werden. Außerdem ist es vorteilhaft möglich, längere Inspektions- und/oder Reparaturintervalle vorzusehen, was die Wirtschaftlichkeit des Fahrzeuges erhöht.

Von ganz besonderem Vorteil ist ein Fahrwerk, insbesondere ein aktives Fahrwerk für ein Kraftfahrzeug, das wenigstens ein erfindungsgemäßes Getriebesystem oder einen erfindungsgemäßen Aktuator mit einem solchen Getriebesystem aufweist. Durch die Verwendung des erfindungsgemäßen Getriebesystems bzw. des erfindungsgemäßen Aktuators kann die Zuverlässigkeit des Fahrwerks erhöht werden. Insbesondere können umfangreiche Reparaturarbeiten vermieden werden. Dies ist von besonderem Vorteil, weil eine Reparatur oder ein Austausch eines verschlissenen Getriebes bei einem Fahrwerk besonders aufwendig ist, da viele andere Bauteile für die Reparatur vorübergehend demontiert werden müssen.

Von ganz besonderem Vorteil ist eine Lenkung, insbesondere PKW-Lenkung oder LKW-Lenkung, die wenigstens ein erfindungsgemäßes Getriebesystem oder einen erfindungsgemäßen Aktuator mit einem solchen Getriebesystem aufweist. Die Lenkung kann insbesondere eine Servolenkung und/oder eine Überlagerungslenkung sein. Durch die Verwendung des erfindungsgemäßen Getriebesystems bzw. des erfindungsgemäßen Aktuators kann die Zuverlässigkeit der Lenkung erheblich erhöht werden. Insbesondere können umfangreiche Reparaturarbeiten vermieden werden. Dies ist von besonderem Vorteil, weil eine Reparatur oder ein Austausch eines verschlissenen Getriebes bei einer Lenkung besonders aufwendig ist, da viele andere Bauteile für die Reparatur vorübergehend demontiert werden müssen.

Ganz allgemein kann das von dem wenigstens einen Verformungssensor erzeugte Messsignal als Regelgröße zum Steuern eines Systems, in dem das Getriebesystem verbaut ist, verwendet werden. Beispielsweise kann vorteilhaft vorgesehen sein, dass wenigstens eine Sicherheitshandlung des Systems ausgelöst wird, wenn die von den Verformungssensoren erzeugten Messsignale einen (beispielsweise werkseitig) vorgegebenen oder (beispielsweise von einem Benutzer) vorgebbaren Verformungsgrenzwert überschreiten. Beispielsweise kann eine Eingabevorrichtung vorhanden oder anschließbar sein, über die ein Benutzer einen solchen Verformungsgrenzwert vorgeben kann, der nach der Eingabe in einem Speicher der Steuerungsvorrichtung abgespeichert wird. Die Sicherheitshandlung kann beispielsweise eine Sicherheitsabschaltung, insbesondere eine Sicherheitsabschaltung eines Antriebsmotors, oder eine Leistungsreduzierung, insbesondere eine Reduzierung der Ausgangsleistung eines Antriebsmotors umfassen.

Alternativ oder zusätzlich kann vorteilhaft vorgesehen sein, dass der wenigsten seine Verformungssensor Teil eines elektronischen oder elektrischen Regekreises, insbesondere eines Aktuators, eines Roboters oder einer Fahrzeugkomponente ist. Insbesondere ist bei einer ganz besonders vorteilhaften Ausführung vorgesehen, dass ein Antriebsmotor und/oder eine Kupplung und/oder eine Bremse in Abhängigkeit von dem Messsignal des wenigstens einen Verformungssensors gesteuert wird. Der Antriebsmotor, die Kupplung und/oder die Bremse können beispielsweise Teil eines Aktuators, eines Roboters oder einer Fahrzeugkomponente sein.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Aktuators, der ein erstes Ausführungsbeispiel eines erfindungsgemäßen Getriebesystems beinhaltet,
- Fig. 2: ein zweites Ausführungsbeispiel eines erfindungsgemäßen Aktuators, der ein zweites Ausführungsbeispiel eines erfindungsgemäßen Getriebesystems beinhaltet,
- Fig. 3: ein drittes Ausführungsbeispiel eines erfindungsgemäßen Aktuators, der ein drittes Ausführungsbeispiel eines erfindungsgemäßen Getriebesystems beinhaltet,
- Fig. 4: ein viertes Ausführungsbeispiel eines erfindungsgemäßen Aktuators der ein viertes Ausführungsbeispiel eines erfindungsgemäßen Getriebesystems beinhaltet,
- Fig. 5: ein Ausführungsbeispiel eines elastisch verformbaren Koppelbauteils für ein erfindungsgemäßes Getriebesystem,
- Fig. 6: ein sechstes Ausführungsbeispiel eines erfindungsgemäßen Aktuators, der ein sechstes Ausführungsbeispiel eines erfindungsgemäßen Getriebesystems beinhaltet,
- Fig. 7: ein siebentes Ausführungsbeispiel eines erfindungsgemäßen Aktuators, der ein siebentes Ausführungsbeispiel eines erfindungsgemäßen Getriebesystems beinhaltet,
- Fig. 8: ein achtes Ausführungsbeispiel eines erfindungsgemäßen Aktuators, der ein achtes Ausführungsbeispiel eines erfindungsgemäßen Getriebesystems beinhaltet,
- Fig. 9: ein neuntes Ausführungsbeispiel eines erfindungsgemäßen Aktuators der ein neuntes Ausführungsbeispiel eines erfindungsgemäßen Getriebesystems beinhaltet,
- Fig. 10: ein zehntes Ausführungsbeispiel eines erfindungsgemäßen Aktuators der ein zehntes Ausführungsbeispiel eines erfindungsgemäßen Getriebesystems beinhaltet, und
- Fig. 11: eine Schnittdarstellung von Details des zehnten Ausführungsbeispiels eines erfindungsgemäßen Aktuators entlang der in Figur 10 eingezeichneten Schnittlinie A-A.

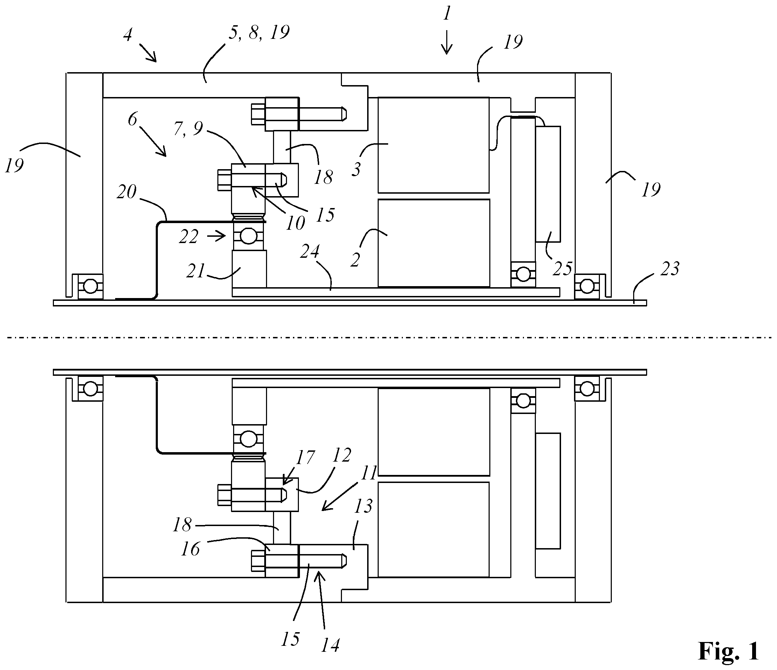

Fig. 1 zeigt ein erstes Ausführungsbeispiel eines erfindungsgemäßen Aktuators, der einen elektrischen Antriebsmotor 1 mit einem Rotor 2 und einem Stator 3 aufweist. Der Aktuator weist außerdem ein erstes Ausführungsbeispiel eines erfindungsgemäßen Getriebesystems 4 auf. Das Getriebesystem beinhaltet in einem Getriebegehäuse 5 ein als Spannungswellengetriebe ausgebildetes Dreiwellengetriebe 6, das ein ringförmiges Zahnrad 7 aufweist. Das Getriebegehäuse 5 dient als ein Drehmomentabstützelement 8.

Das Zahnrad 7 weist eine Innenverzahnung auf und ist als Flansch 9 mit mehreren Durchgangsbohrungen 10 ausgebildet. Das Zahnrad 7 ist mittels eines elastisch verformbaren Koppelbauteils 11, das einen mit dem Flansch 9 drehfest verbundenen Gegenflansch 12 aufweist, an dem Drehmomentabstützelement 8 festgelegt. Konkret weist das Drehmomentabstützelement 8 einen ringförmigen Gegenabstützflansch 13 mit Gewindebohrungen 14 auf, der mittels Befestigungsschrauben 15 mit einem Abstützflansch 16 des elastisch verformbaren Koppelbauteils 11 verbunden ist. Außerdem weist der Gegenflansch 12 Gewindebohrungen 17 auf, in die Befestigungsschrauben 15 eingedreht sind, die durch die Durchgangsbohrungen 10 des Flanschs 9 verlaufen, um eine drehfeste Verbindung zwischen dem Flansch 9 und dem Gegenflansch 12 herzustellen.

Das elastisch verformbare Koppelbauteil 11 weist mehrere radial ausgerichtete Biegebalken 18 auf, die den Gegenflansch 12 mit dem Abstützflansch 16 verbinden.

Das Zahnrad fungiert als Circularspline des Spannungswellengetriebes, das außerdem einen topfförmigen Flexspline 20 aufweist, in dem ein, vorzugsweise elliptischer, Wellengenerator 21 mittels eines radialflexiblen Wälzlagers 22 rotierbar angeordnet ist. Der Flexspline 20 ist drehfest mit einer rotierbar gelagerten Abtriebswelle 23 verbunden, die als Hohlwelle ausgebildet ist. Der Wellengenerator 21 ist über eine rotierbar gelagerte Antriebswelle 24, die als Hohlwelle ausgebildet ist, mit dem Rotor 2 drehfest verbunden.

Das Getriebegehäuse 5, das das Dreiwellengetriebe 6 einhaust, ist Teil eines Aktuatorgehäuses 19, das auch den Antriebsmotor 1 sowie eine Steuerungsvorrichtung, nämlich eine Steuerungselektronik 25, einhaust.

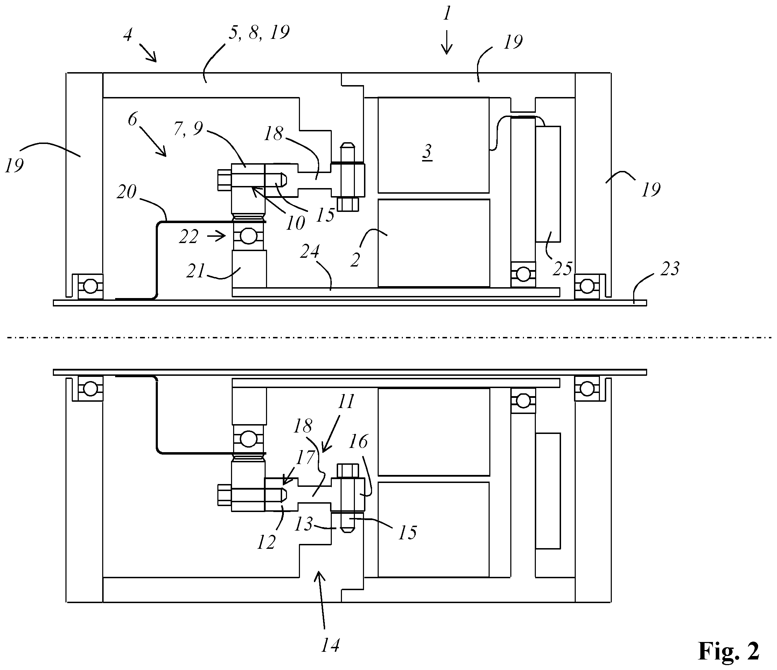

Figur 2 zeigt ein zweites Ausführungsbeispiel eines erfindungsgemäßen Aktuators, der ähnlich aufgebaut ist, wie der in Figur 1 dargestellte Aktuator. Im Unterschied zu dem in Figur 1 dargestellten Aktuator weist das elastisch verformbare Koppelbauteil 11 mehrere axial ausgerichtete Biegebalken 18 auf, die den Gegenflansch 12 mit dem Abstützflansch 16 verbinden.

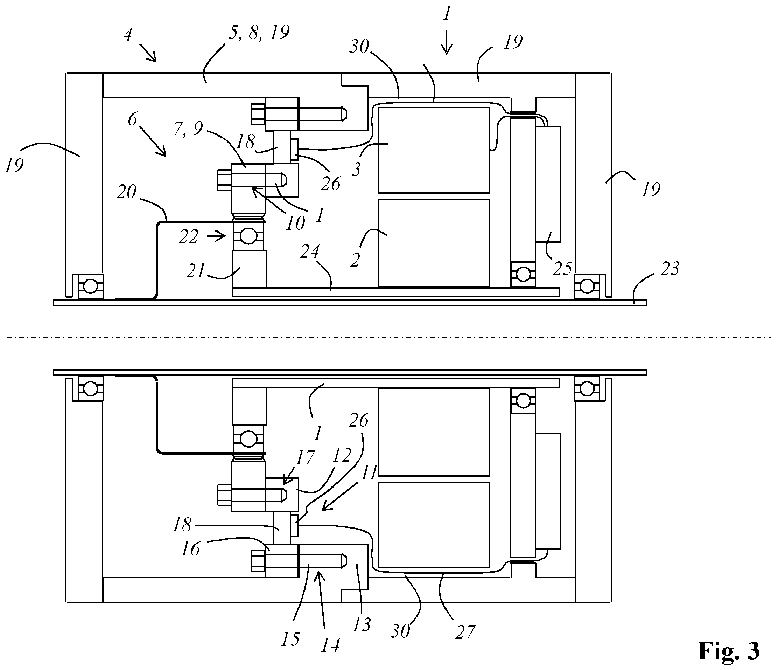

Figur 3 zeigt ein drittes Ausführungsbeispiel eines erfindungsgemäßen Aktuators, der ähnlich aufgebaut ist, wie der in Figur 1 dargestellte Aktuator. Bei diesem Ausführungsbeispiel ist an jedem Biegebalken 18 ein Verformungssensor 26 angeordnet, um die Biegeverformungen der Biegebalken 18 messtechnisch zu erfassen. Aus der gemessenen Verformung kann auf das Drehmoment zurückgeschlossen werden, das auf das Zahnrad 7 einwirkt. Die Verformungssensoren 26 sind jeweils mittels eines Kabels 27, das durch einen Zwischenraum 30 zwischen dem Antriebsmotor 1 und dem Aktuatorgehäuse 19, nämlich durch einen Zwischenraum 30 zwischen dem Stator 3 des Antriebsmotors 1 und dem Aktuatorgehäuse 19, hindurch verläuft, elektrisch an die Steuerungselektronik 25 angeschlossen. Der Stator 3 ist mit Verbindungselementen, die radial durch den Zwischenraum 30 verlaufen, drehfest mit dem Aktuatorgehäuse verbunden, was in der Figur jedoch nicht dargestellt ist.

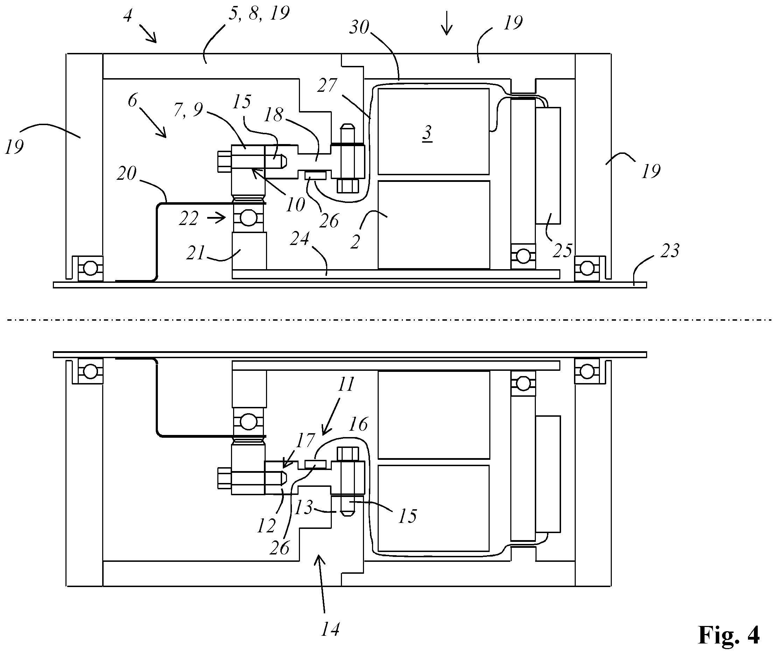

Figur 4 zeigt ein viertes Ausführungsbeispiel eines erfindungsgemäßen Aktuators, der ähnlich aufgebaut ist, wie der in Figur 3 dargestellte Aktuator. Im Unterschied zu dem in Figur 3 dargestellten Aktuator weist das elastisch verformbare Koppelbauteil 11 mehrere axial ausgerichtete Biegebalken 18 auf, die den Gegenflansch 12 mit dem Abstützflansch 16 verbinden.

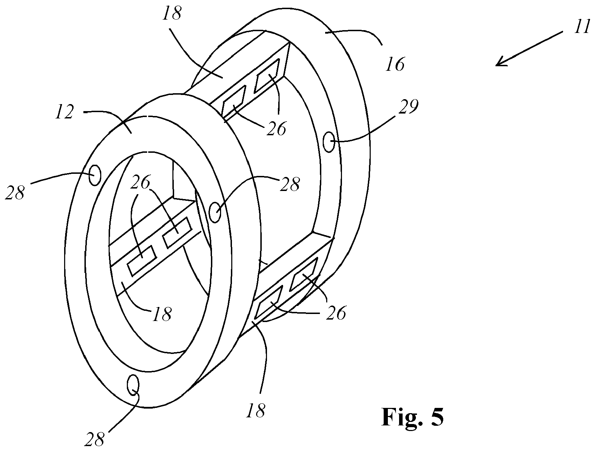

Figur 5 zeigt ein Ausführungsbeispiel eines elastisch verformbaren Koppelbauteils 11 für ein erfindungsgemäßes Getriebesystem 4. Das elastisch verformbare Koppelbauteil 11 weist einen Gegenflansch 12 mit mehreren Bohrungen 28 auf, der dazu ausgebildet ist mit einem als Flansch 9 ausgebildeten Zahnrad 7 oder einem Flansch 9 eines Zahnrades 7 drehfest verbunden zu werden. Das elastisch verformbare Koppelbauteil 11 weist außerdem einen Abstützflansch 16 mit mehreren weiteren Bohrungen 29 auf, der dazu ausgebildet ist mit einem Gegenabstützflansch 13 eines Drehmomentabstützelements 8 drehfest verbunden zu werden.

Der Gegenflansch 12 und der Abstützflansch 16 sind koaxial zueinander angeordnet und mittels mehrerer Biegebalken 18 relativ zueinander elastisch rotierbar miteinander verbunden. An die Biegebalken 18 können Verformungssensoren 26, insbesondere in Form von Dehnungsmessstreifen, angebracht werden um die Biegeverformungen der Biegebalken 18 im Betrieb des Getriebesystems messtechnisch zu erfassen. Die Verformungssensoren 26 können insbesondere Dehnungsmessstreifen aufweisen, die auf die Biegebalken 18 aufgeklebt sind.

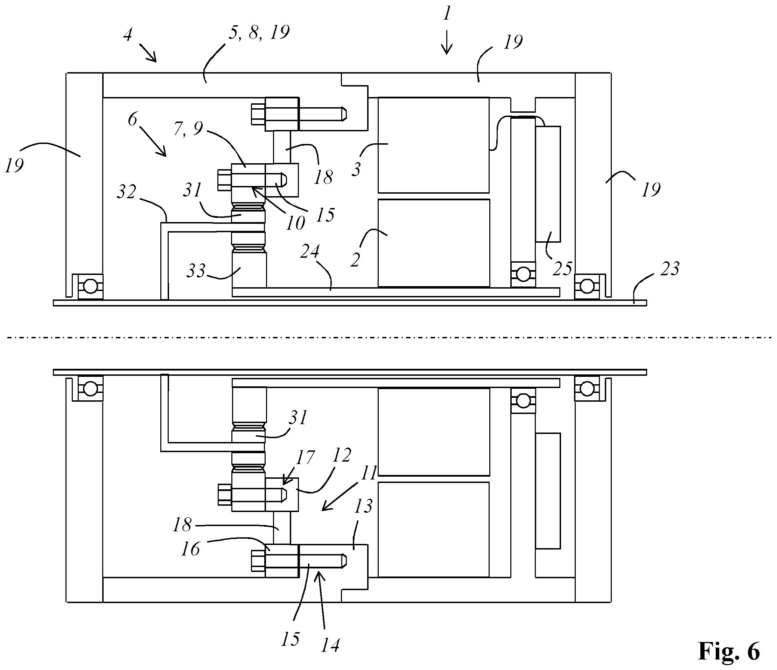

Fig. 6 zeigt ein sechstes Ausführungsbeispiel eines erfindungsgemäßen Aktuators, der einen elektrischen Antriebsmotor 1 mit einem Rotor 2 und einem Stator 3 aufweist. Der Aktuator weist außerdem ein sechstes Ausführungsbeispiel eines erfindungsgemäßen Getriebesystems 4 auf. Das Getriebesystem beinhaltet in einem Getriebegehäuse 5 ein als Planetengetriebe ausgebildetes Dreiwellengetriebe 6, das ein ringförmiges innenverzahntes Zahnrad 7 aufweist. Das Getriebegehäuse 5 dient als ein Drehmomentabstützelement 8.

Das Zahnrad 7 ist mittels eines elastisch verformbaren Koppelbauteils 11, das einen mit dem Flansch 9 drehfest verbundenen Gegenflansch 12 aufweist, an dem Drehmomentabstützelement 8 festgelegt. Konkret weist das Drehmomentabstützelement 8 einen ringförmigen Gegenabstützflansch 13 mit Gewindebohrungen 14 auf, der mittels Befestigungsschrauben 15 mit einem Abstützflansch 16 des elastisch verformbaren Koppelbauteils 11 verbunden ist. Außerdem weist der Gegenflansch 12 Gewindebohrungen 17 auf, in die Befestigungsschrauben 15 eingedreht sind, die durch die Durchgangsbohrungen 10 des Flanschs 9 verlaufen, um eine drehfeste Verbindung zwischen dem Flansch 9 und dem Gegenflansch 12 herzustellen.

Das elastisch verformbare Koppelbauteil 11 weist mehrere radial ausgerichtete Biegebalken 18 auf, die den Gegenflansch 12 mit dem Abstützflansch 16 verbinden.

Das Zahnrad 7 weist eine Innenverzahnung auf und ist als Flansch 9 mit mehreren Durchgangsbohrungen 10 ausgebildet. Das Zahnrad 7 steht in Zahneingriff mit außenverzahnten Planetenrädern 31, die rotierbar auf einem Planetenträger 32 gelagert sind. Der Planetenträger 32 ist drehfest mit einer rotierbar gelagerten Abtriebswelle 23 verbunden, die als Hohlwelle ausgebildet ist. Ein außenverzahntes Sonnenrad 33 ist über eine rotierbar gelagerte Antriebswelle 24, die als Hohlwelle ausgebildet ist, mit dem Rotor 2 drehfest verbunden.

Das Getriebegehäuse 5, das das Dreiwellengetriebe 6 einhaust, ist Teil eines Aktuatorgehäuses 19, welches auch den Antriebsmotor 1 sowie eine Steuerungsvorrichtung, nämlich eine Steuerungselektronik 25, einhaust.

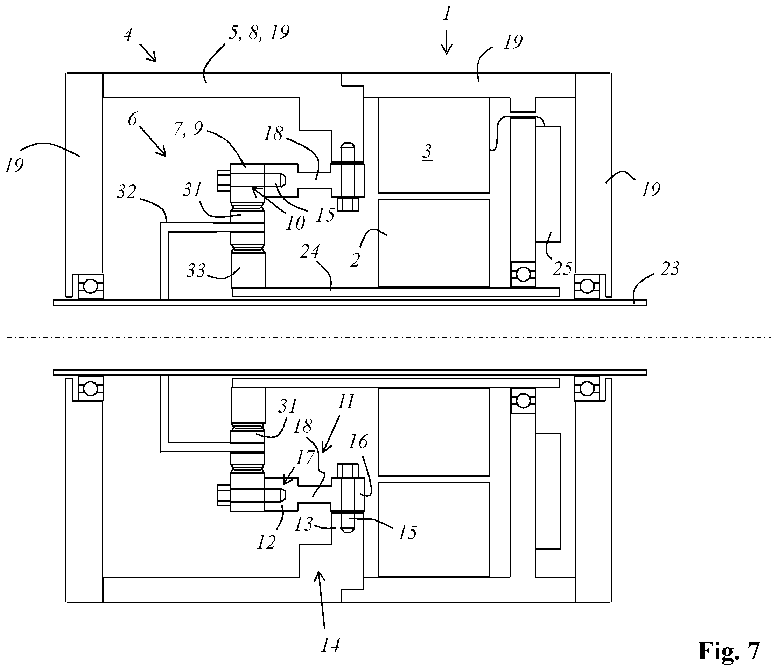

Figur 7 zeigt ein siebentes Ausführungsbeispiel eines erfindungsgemäßen Aktuators, der ähnlich aufgebaut ist, wie der in Figur 6 dargestellte Aktuator. Im Unterschied zu dem in Figur 6 dargestellten Aktuator weist das elastisch verformbare Koppelbauteil 11 mehrere axial ausgerichtete Biegebalken 18 auf, die den Gegenflansch 12 mit dem Abstützflansch 16 verbinden.

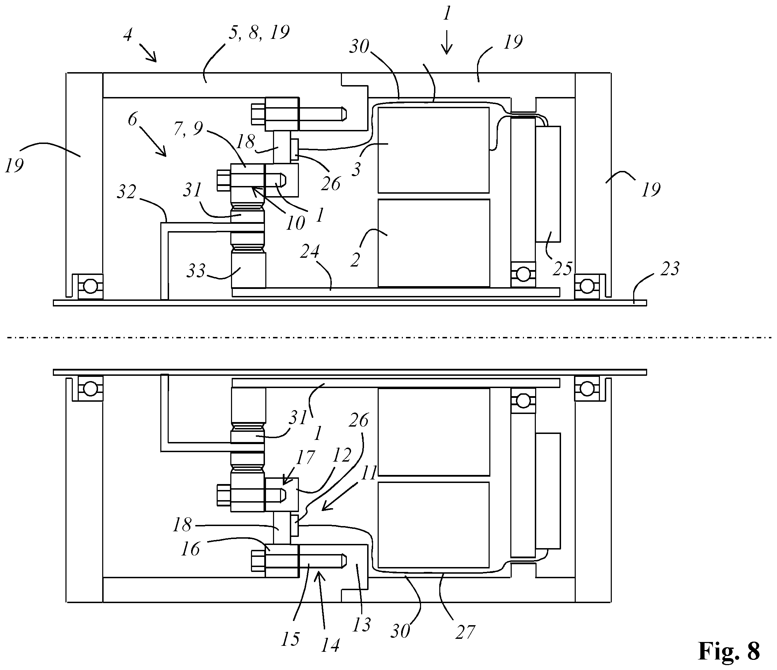

Figur 8 zeigt ein achtes Ausführungsbeispiel eines erfindungsgemäßen Aktuators, der ähnlich aufgebaut ist, wie der in Figur 6 dargestellte Aktuator. Bei diesem Ausführungsbeispiel ist an jedem Biegebalken 18 ein Verformungssensor 26 angeordnet, um die Biegeverformungen der Biegebalken 18 messtechnisch zu erfassen. Aus der gemessenen Verformung kann auf das Drehmoment zurückgeschlossen werden, das auf das Zahnrad 7 einwirkt. Die Verformungssensoren 26 sind jeweils mittels eines Kabels 27, das durch einen Zwischenraum 30 zwischen dem Antriebsmotor 1 und dem Aktuatorgehäuse 19, nämlich durch einen Zwischenraum 30 zwischen dem Stator 3 des Antriebsmotors 1 und dem Aktuatorgehäuse 19, hindurch verläuft, elektrisch an die Steuerungselektronik 25 angeschlossen. Der Stator 3 ist mit Verbindungselementen, die radial durch den Zwischenraum 30 verlaufen, drehfest mit dem Aktuatorgehäuse verbunden, was in der Figur jedoch nicht dargestellt ist.

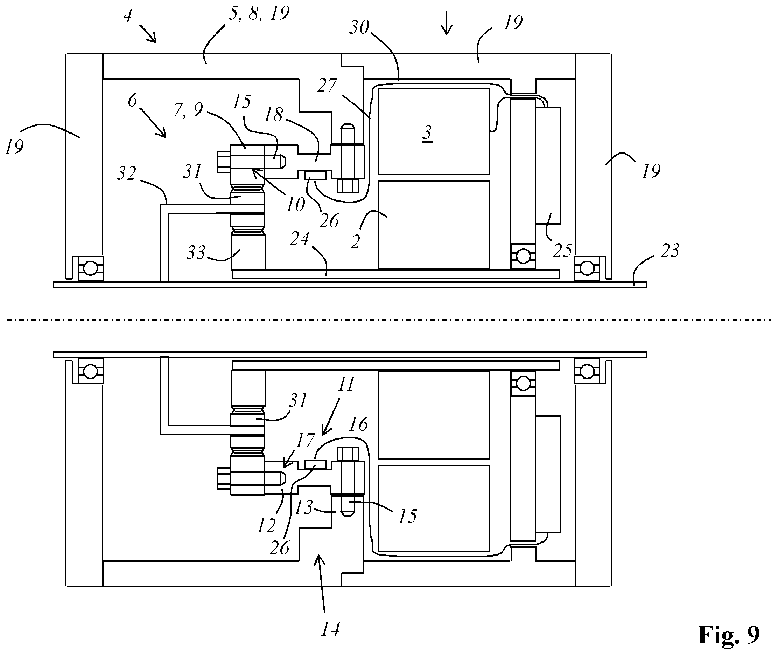

Figur 9 zeigt ein neuntes Ausführungsbeispiel eines erfindungsgemäßen Aktuators, der ähnlich aufgebaut ist, wie der in Figur 8 dargestellte Aktuator. Im Unterschied zu dem in Figur 8 dargestellten Aktuator weist das elastisch verformbare Koppelbauteil 11 mehrere axial ausgerichtete Biegebalken 18 auf, die den Gegenflansch 12 mit dem Abstützflansch 16 verbinden.

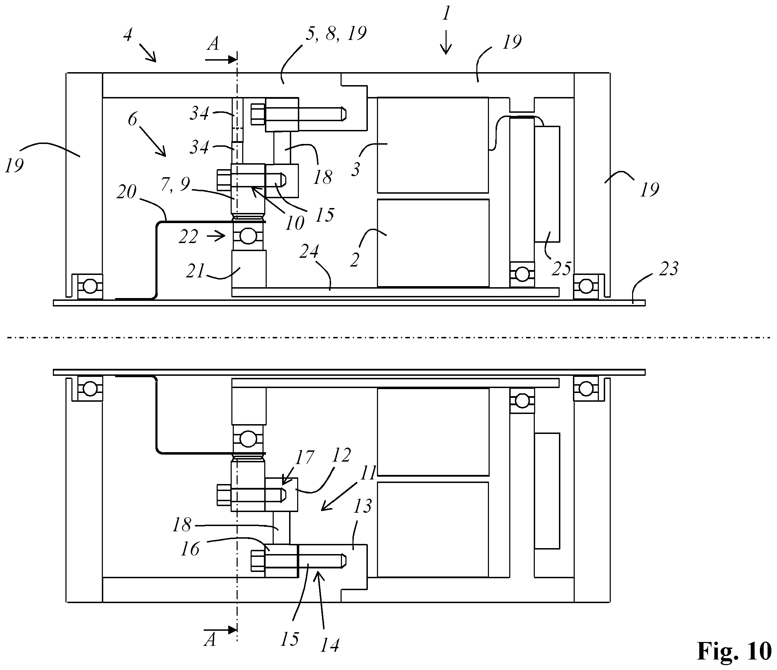

Figur 10 zeigt ein zehntes Ausführungsbeispiel eines erfindungsgemäßen Aktuators, der ähnlich aufgebaut ist, wie der in Figur 1 dargestellte Aktuator. Im Unterschied zu dem in Figur 1 dargestellten Aktuator sind Anschlagelemente 34 vorhanden, die den Verformungsweg des elastisch verformbaren Koppelbauteils 11 begrenzen. Vorzugsweise begrenzen die Anschlagelemente 34 den Verformungsweg des elastisch verformbaren Koppelbauteils 11 auf ein Maß, bei dem ausschließlich eine elastische Verformung des elastisch verformbaren Koppelbauteils 11 und keine plastische Verformung des Koppelbauteils 11 möglich ist. Auf diese Weise wird wirkungsvoll vermieden, dass das elastisch verformbare Koppelbauteil durch eine zu große Drehmomenteinwirkung beschädigt wird. Zwei Anschlagelemente 34 sind fest und unbeweglich an dem Drehmomentabstützelement 8 angeordnet. Sie begrenzen den möglichen Bewegungsweg eines fest und unbeweglich an dem Zahnrad 7 angeordneten Anschlagelements 34.

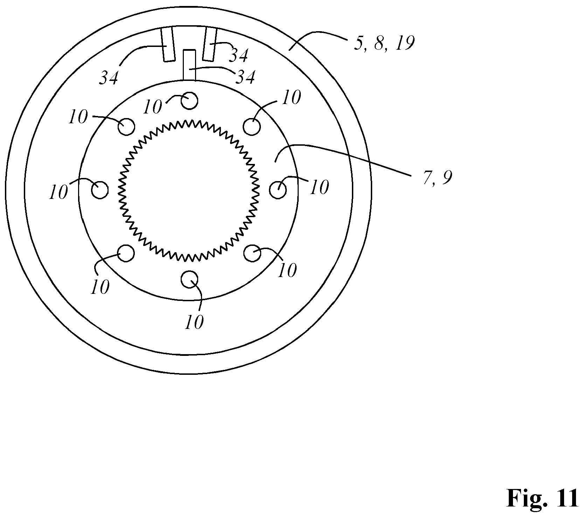

Figur 11 zeigt eine Schnittdarstellung von Details des zehnten Ausführungsbeispiels eines erfindungsgemäßen Aktuators entlang der in Figur 10 eingezeichneten Schnittlinie A-A, wobei jedoch in der Figur 11 der besseren Übersichtlichkeit halber der Flexspline 20, der Wellengenerator 21 und das radialflexible Wälzlager 22 nicht eingezeichnet sind. Die Figur 1 illustriert insbesondere die Funktionsweise der Anschlagelemente 34, die den Verformungsweg des elastisch verformbaren Koppelbauteils 11 auf ein Maß, bei dem ausschließlich eine elastische Verformung des elastisch verformbaren Koppelbauteils 11 und keine plastische Verformung des Koppelbauteils 11 möglich ist.

### Bezugszeichenliste:

- 1: Antriebsmotor
- 2: Rotor
- 3: Stator
- 4: Getriebesystem
- 5: Getriebegehäuse
- 6: Dreiwellengetriebe
- 7: Zahnrad
- 8: Drehmomentabstützelement
- 9: Flansch
- 10: Durchgangsbohrung
- 11: elastisch verformbaren Koppelbauteil
- 12: Gegenflansch
- 13: Gegenabstützflansch
- 14: Gewindebohrung
- 15: Befestigungsschraube
- 16: Abstützflansch
- 17: Gewindebohrung
- 18: Biegebalken
- 19: Aktuatorgehäuse
- 20: Flexspline
- 21: Wellengenerator
- 22: Radialflexibles Wälzlager
- 23: Abtriebswelle
- 24: Antriebswelle
- 25: Steuerungselektronik
- 26: Verformungssensor
- 27: Kabel
- 28: Bohrungen
- 29: Weitere Bohrungen
- 30: Zwischenraum
- 31: Planetenrad
- 32: Planetenträger
- 33: Sonnenrad
- 34: Anschlagelement

## Patentansprüche

1. Getriebesystem (4), das ein Drehmomentabstützelement (8) und ein Dreiwellengetriebe (6) aufweist, welches wenigstens ein, insbesondere ringförmiges, Zahnrad (7) aufweist, **dadurch gekennzeichnet, dass** das Zahnrad (7) als Flansch (9) ausgebildet ist oder einen Flansch (9) aufweist und dass das Zahnrad (7) mittels eines elastisch verformbaren Koppelbauteils (11), das einen mit dem Flansch (9) drehfest verbundenen Gegenflansch (12) aufweist, an dem Drehmomentabstützelement (8) festgelegt ist.

2. Getriebesystem (4) nach Anspruch 1, **dadurch gekennzeichnet, dass**
a. der Flansch (9) an den Gegenflansch (12) angeschraubt ist, und/oder dass
b. der Gegenflansch (12) ringförmig ausgebildet ist.

3. Getriebesystem (4) nach Anspruch 1 oder 2, **dadurch gekennzeichnet, dass**
a. das Zahnrad (7) unmittelbar und ohne Zwischenschaltung eines weiteren Bauteils an dem elastisch verformbaren Koppelbauteil (11) befestigt ist und/oder dass das elastisch verformbare Koppelbauteil (11) unmittelbar und ohne Zwischenschaltung eines weiteren Bauteils an dem Drehmomentabstützelement (8) befestigt ist, und/oder dass
b. das Zahnrad (7) eine Innenverzahnung aufweist, und/oder dass
c. das Zahnrad (7) aus einem anderen Material hergestellt ist, als das elastisch verformbare Koppelbauteil (11), und/oder dass
d. das ringförmige Zahnrad (7) aus Stahl hergestellt ist.

4. Getriebesystem (4) nach einem der Ansprüche 1 bis 3, **dadurch gekennzeichnet, dass** das elastisch verformbare Koppelbauteil (11) aus einem der nachfolgend genannten Materialien hergestellt ist: Aluminium, Aluminiumlegierung, Titan, Titanlegierung, Kunststoff, Stahl.

5. Getriebesystem (4) nach einem der Ansprüche 1 bis 4, **dadurch gekennzeichnet, dass** wenigstens ein Anschlagelement (34) vorhanden ist, das
a. einen Verformungsweg des elastisch verformbaren Koppelbauteils (11) begrenzt und/oder das
b. ausschließlich eine elastische Verformung des elastisch verformbaren Koppelbauteils (11) zulässt.

6. Getriebesystem (4) nach einem der Ansprüche 1 bis 5, **dadurch gekennzeichnet, dass**
a. das Drehmomentabstützelement (8) als ein Getriebegehäuse (5) ausgebildet ist, oder dass
b. das Drehmomentabstützelement (8) als ein Getriebegehäuse (5) ausgebildet ist, das (5) wenigstens einen Teil des Dreiwellengetriebes (6), insbesondere das gesamte Dreiwellengetriebe (6), einhaust, oder dass
c. das Drehmomentabstützelement (8) als ein Getriebegehäuse (5) ausgebildet ist, das (5) das elastisch verformbare Koppelbauteil (11) einhaust.

7. Getriebesystem (4) nach einem der Ansprüche 1 bis 6, **dadurch gekennzeichnet, dass**
a. das elastisch verformbare Koppelbauteil (11) einen, insbesondere ringförmigen, Abstützflansch (16) aufweist, der, insbesondere zerstörungsfrei wieder lösbar, drehfest an dem Drehmomentabstützelement (8) festgelegt ist, oder dass
b. das elastisch verformbare Koppelbauteil (11) einen, insbesondere ringförmigen, Abstützflansch (16) aufweist, der, insbesondere zerstörungsfrei wieder lösbar, drehfest an dem Drehmomentabstützelement (8) festgelegt ist, wobei das Drehmomentabstützelement (8) einen, insbesondere ringförmigen, Gegenabstützflansch (13) aufweist, der mit dem Abstützflansch (16), insbesondere zerstörungsfrei wieder lösbar, verbunden ist, oder dass
c. das elastisch verformbare Koppelbauteil (11) einen, insbesondere ringförmigen, Abstützflansch (16) aufweist, der, insbesondere zerstörungsfrei wieder lösbar, drehfest an dem Drehmomentabstützelement (8) festgelegt ist, wobei das Drehmomentabstützelement (8) einen, insbesondere ringförmigen, Gegenabstützflansch (13) aufweist, an den der Abstützflansch (16), angeschraubt ist.

8. Getriebesystem (4) nach einem der Ansprüche 1 bis 7, **dadurch gekennzeichnet, dass**
a. das elastisch verformbare Koppelbauteil (11) wenigstens einen elastisch verformbaren Biegebalken (18), insbesondere mehrere elastisch verformbare Biegebalken (18), aufweist, oder dass
b. das elastisch verformbare Koppelbauteil (11) wenigstens einen elastisch verformbaren Biegebalken (18), insbesondere mehrere elastisch verformbare Biegebalken (18), aufweist, wobei der wenigstens eine elastisch verformbare Biegebalken (18) als Doppelbiegebalken ausgebildet ist, oder dass
c. das elastisch verformbare Koppelbauteil (11) wenigstens einen elastisch verformbaren Biegebalken (18), insbesondere mehrere elastisch verformbare Biegebalken (18), aufweist, wobei der elastisch verformbare Biegebalken (18) radial angeordnet ist bzw. dass die mehreren Biegebalken (18) radial angeordnet sind, oder dass.
d. das elastisch verformbare Koppelbauteil (11) wenigstens einen elastisch verformbaren Biegebalken (18), insbesondere mehrere elastisch verformbare Biegebalken (18), aufweist, wobei der elastisch verformbare Biegebalken (18) axial angeordnet ist bzw. die mehreren Biegebalken (18) axial angeordnet sind, oder dass
e. das elastisch verformbare Koppelbauteil (11) wenigstens einen elastisch verformbaren Biegebalken (18), insbesondere mehrere elastisch verformbare Biegebalken (18), aufweist, wobei der Gegenflansch (12) und der wenigstens eine elastisch verformbare Biegebalken (18) gemeinsam einstückig, insbesondere gemeinsam einstückig aus demselben Stück Rohmaterial, hergestellt sind, oder dass
f. das elastisch verformbare Koppelbauteil (11) wenigstens einen elastisch verformbaren Biegebalken (18), insbesondere mehrere elastisch verformbare Biegebalken (18), aufweist, wobei der Abstützflansch (16) und der wenigstens eine elastisch verformbare Biegebalken (18) gemeinsam einstückig, insbesondere gemeinsam einstückig aus demselben Stück Rohmaterial, hergestellt sind, oder dass
g. das elastisch verformbare Koppelbauteil (11) wenigstens einen elastisch verformbaren Biegebalken (18), insbesondere mehrere elastisch verformbare Biegebalken (18), aufweist, wobei der Gegenflansch (12) und der Abstützflansch (16), insbesondere ausschließlich, mittels des wenigstens einen elastisch verformbare Biegebalkens (18) miteinander verbunden sind.

9. Getriebesystem (4) nach einem der Ansprüche 1 bis 8, **dadurch gekennzeichnet, dass** an dem elastisch verformbaren Koppelbauteil (11) wenigstens ein Verformungssensor (26) angeordnet ist, der Messsignale erzeugt.

10. Getriebesystem (4) nach Anspruch 9, **dadurch gekennzeichnet, dass**
a. der Verformungssensor (26) wenigstens einen Dehnungsmessstreifen aufweist, und/oder dass
b. eine Steuerungsvorrichtung vorhanden ist, die dazu ausgebildet ist, die Messsignale des Verformungssensors (26) auszuwerten, und/oder dass
c. eine Steuerungsvorrichtung vorhanden ist, die dazu ausgebildet ist, die Messsignale des Verformungssensors (26) auszuwerten und die dazu ausgebildet ist, einen Messwert, insbesondere an ein drehmomenteinspeisendes System, auszugeben und/oder ein Abschaltsignal, insbesondere an ein drehmomenteinspeisendes System und/oder an eine schaltbare Kupplung, auszugeben, wenn ein vorgegebener oder vorgebbarer Verformungsgrenzwert überschritten wird.

11. Getriebesystem (4) nach einem der Ansprüche 1 bis 10, **dadurch gekennzeichnet, dass**
a. das Dreiwellengetriebe (6) als Spannungswellengetriebe ausgebildet ist, oder dass
b. das Dreiwellengetriebe (6) als Spannungswellengetriebe ausgebildet ist, wobei das Zahnrad (7) ein Circularspline oder ein Dynamicspline des Spannungswellengetriebes ist, oder dass
c. das Dreiwellengetriebe (6) als Planetengetriebe ausgebildet ist, oder dass
d. das Dreiwellengetriebe (6) als Planetengetriebe ausgebildet ist, wobei das Zahnrad (7) ein Hohlrad des Planetengetriebes ist.

12. Aktuator, der ein Getriebesystem (4) nach einem der Ansprüche 1 bis 11 und einen, insbesondere elektrischen, Antriebsmotor (1) aufweist, dem das Getriebesystem (4) triebtechnisch nachgeschaltet ist.

13. Aktuator nach Anspruch 12, **dadurch gekennzeichnet, dass**
a. der Antriebsmotor (1) und das Dreiwellengetriebe (6) koaxial angeordnet sind, und/oder dass
b. ein Aktuatorgehäuse (19) vorhanden ist, das den Antriebsmotor (1) und/oder das Dreiwellengetriebe (6) einhaust, und/oder dass
c. ein Aktuatorgehäuse (19) vorhanden ist, das wenigstens teilweise durch das Getriebegehäuse (5) gebildet ist, und/oder dass
d. ein Aktuatorgehäuse (19) vorhanden ist, in dem eine Steuerungselektronik (25) angeordnet ist, und/oder dass
e. eine Steuerungselektronik (25), insbesondere mit einer Platine, räumlich zwischen dem Dreiwellengetriebe (6) und dem Antriebsmotor angeordnet ist, und/oder dass
f. der Antriebsmotor (1) räumlich zwischen dem Dreiwellengetriebe (6) und der Steuerungselektronik (25) angeordnet ist, und/oder dass
g. wenigstens ein elektrisches Kabel (27) oder wenigstens eine Litze vorhanden ist, die von einem an dem Koppelbauteil (11) angeordneten Verformungssensor (26) durch einen Zwischenraum (30) zwischen dem Antriebsmotor und dem Aktuatorgehäuse, insbesondere durch einen Zwischenraum (30) zwischen einem Stator (3) des Antriebsmotors (1) und dem Aktuatorgehäuse (19), hindurch zu der Steuerungselektronik (25) verläuft.

14. Roboter, insbesondere Industrieroboter, oder Robotergelenk beinhaltend wenigstens ein Getriebesystem (4) nach einem der Ansprüche 1 bis 11 oder einen Aktuator nach Anspruch 12 oder 13.

15. Fahrzeugkomponente, die wenigstens ein Getriebesystem (4) nach einem der Ansprüche 1 bis 11 oder einen Aktuator nach Anspruch 12 oder 13 aufweist, insbesondere wobei
a. die Fahrzeugkomponente als Fahrwerk, insbesondere aktives Fahrwerk, für ein Kraftfahrzeug ausgebildet ist, oder wobei
b. die Fahrzeugkomponente als Lenkung, insbesondere als Servolenkung und/oder Überlagerungslenkung, beispielsweise für einen PKW oder einen LKW ausgebildet ist.
